# EUROPEAN PATENT SPECIFICATION

(11) **EP 3 402 301 B1**
(45) Date of publication and mention of the grant of the patent: **10.07.2019**
(21) Application number: 18181829.5
(22) Date of filing: 13.05.2016
(51) Int. Cl.: H04W 76/11, H04W 74/08, H04W 72/04

(54) **METHODS, WIRELESS COMMUNICATION DEVICE AND RADIO NETWORK NODE FOR MANAGING CONTENTION RESOLUTION**
VERFAHREN, DRAHTLOSKOMMUNIKATIONSVORRICHTUNG UND FUNKNETZWERKKNOTEN ZUR VERWALTUNG VON KONKURRENZAUFLÖSUNG
PROCÉDÉS, DISPOSITIF DE COMMUNICATION SANS FIL ET NOEUD DE RÉSEAU RADIO POUR GÉRER UNE RÉSOLUTION DE CONTENTION

(30) Priority: 19.05.2015 US 201562163417 P
(43) Date of publication of application: 14.11.2018
(62) Divisional of application: 16727858.9
(73) Proprietor: Telefonaktiebolaget LM Ericsson (publ), 164 83 Stockholm (SE)
(72) Inventor: SUNDBERG, Mårten, 120 53 Årsta (SE); HOFSTRÖM, Björn, 589 41 Linköping (SE); BERGQVIST, Jens, 587 37 Linköping (SE); JOHANSSON, Nicklas, 590 45 Brokind (SE); DIACHINA, John Walter, Garner, North Carolina 27529 (US)
(74) Representative: Ericsson

(56) References cited:
- WO-A1-2008/084949
- US-A1- 2012 257 576

## Description

### TECHNICAL FIELD

Embodiments herein relate to wireless communication systems, such as cellular networks. In particular, methods and a corresponding wireless communication device and a corresponding radio network node are disclosed. Corresponding computer programs and carriers therefor are also disclosed.

### BACKGROUND

With cellular technologies, such as Global System for Mobile communications (GSM)/Enhanced Data rates for Global Evolution (EDGE) etc., a cellular system is often operated using a fixed frame structure in time and well defined channels in frequency. Scheduling of resources, i.e. portions of the frame structure, are typically handled by a base station or nodes controlling the base station in the cellular network. One exception to this is typically on the Random Access CHannel (RACH), where users, or Mobile Stations (MS), make an initial access attempt without being scheduled in an effort to receive resource allocations. Hence, multiple users can access the system simultaneously resulting in collisions in the access channel.

The RACH is however an inefficient way of communicating between network and device, since the propagation delay of the device is not known, so typically a large guard period in time is needed to cater for different distances between device and base station. Also, the channel is collision based, usually resulting in the use of a slotted ALOHA type access which has a limited access load capacity due to the collisions.

Hence, a minimal amount of information is typically transmitted by a first device, aka MS, in the initial access attempt, to avoid wasting too much RACH resources while attempting to request packet resources. The minimal amount of information can include the number of blocks the first device has to send, N, an identifier of a downlink (DL) coverage class, DL_CC, of the first device to be used by the Base Station System (BSS) when sending subsequent control messages/user data to the first device, and a random identification or identifier (ID) to be included in an access grant sent in response to the initial access attempt. Thus, the device cannot be uniquely identified by the BSS by use of initial access attempt. Therefore, when two devices attempt to access the BSS at the same time (± a small amount of time) and by chance have the same minimal amount of information, there is a need for a follow up procedure, often referred to as 'contention resolution', after the initial access attempt and the subsequent corresponding access grant has been sent on the Access Grant CHannel (AGCH). Each device will consider itself as the intended recipient of the access grant due to that both devices used the same minimal amount of information when sending their respective initial access attempt. When contention has been resolved, one of the devices attempting to access the system has been uniquely identified as the intended recipient of the packet resources allocated by the network (in the access grant) for a device to send uplink packet data payload.

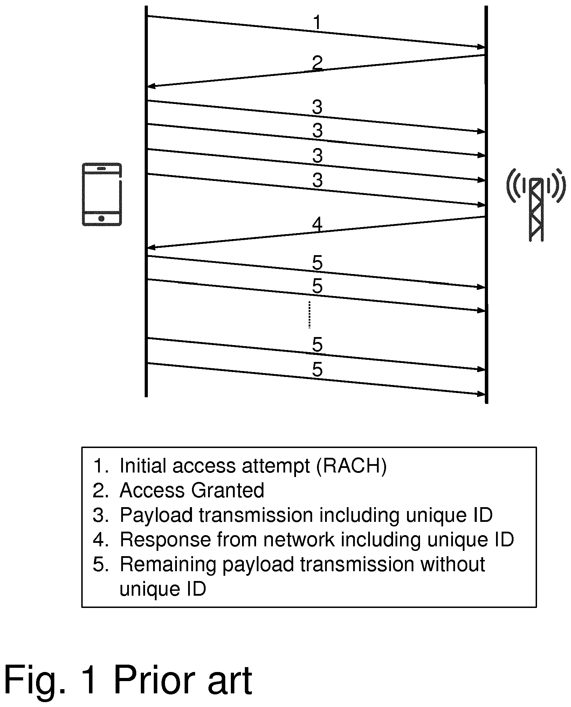

There are multiple ways to perform contention resolution, depending on the cellular technology used wherein a device (the left hand side of **Figure 1**) can conclude that it is the intended recipient of packet resources allocated by the network (the right hand side of Figure 1) for the purpose of data block transmission by the device. Figure 1 is a combined signaling and flowchart illustrating an example of contention resolution according to prior art.

In one procedure, a unique device ID of the device is included in the data block transmissions (3 in Figure 1), effectively reducing the available payload size for application data.

To ensure that the correct data blocks (i.e. data blocks from the same user) have been received the unique device ID needs to be included in all data blocks transmitted, until the network echoes the unique device ID on the DL (4 in Figure 1), and thereby indicates to the device that it has 'won' the contention resolution (i.e. it is the intended recipient of packet resources allocated by the network).

In the remaining data blocks (5 in Figure 1) the unique device ID need not be included since at this point the network knows uniquely which device it is receiving data blocks from on the allocated packet resources.

US 2012/257576 A1 discloses a random access procedure in a LTE context. A UE receives a random access response message with grant information from a Base Station (BS) and transmits a L2/L3 message using the grant information. If the UE has a Cell-Radio Network Temporary Identifier (C-RNTI) it includes the C-RNTI in the L2/L3 message. Without the C-RNTI, the UE includes a unique identity such as a Packet-TMSI (P-TMSI) or an International Mobile Subscriber ID (IMSI) in the L2/L3 message, or alternatively the UE includes a random identity generated by the UE in the L2/L3 message instead of the unique identity.

### SUMMARY

It is an object to provide improvements regarding contention resolution in a system of the above mentioned kind.

According to a first aspect of embodiments herein, the object is achieved by a method, performed by a wireless communication device, for enabling contention resolution of
uplink transmissions at a radio network node. The wireless communication device sends an access request to the radio network node and receives an access grant from the radio network node. The wireless communication device sends, to the radio network node, at least two data blocks, wherein the at least two data blocks includes only one occurrence of a unique device identity (ID) and at least one occurrence of a reduced ID that is represented by fewer bits than the unique device ID.

According to a second aspect of embodiments herein, the object is achieved by a computer program comprising readable code units that when executed by the wireless communication device causes the wireless communication device to perform the method according to the first aspect.

According to a third aspect of embodiments herein, the object is achieved by a carrier comprising the computer program according to the second aspect.

According to a fourth aspect of embodiments herein, the object is achieved by a method, performed by a radio network node, for managing contention resolution of uplink transmissions. The radio network node receives an access request from a wireless communication device and sends an access grant to the wireless communication device. The radio network node receives, from the wireless communication device, at least two data blocks. The at least two data blocks includes only one occurrence of a unique device ID and at least one occurrence of a reduced ID that is represented by fewer bits than the unique device ID.

According to a fifth aspect of embodiments herein, the object is achieved by a computer program comprising readable code units that when executed by the radio network node causes the radio network node to perform the method according to the fourth aspect.

According to a sixth aspect of embodiments herein, the object is achieved by a carrier comprising the computer program according to the fifth aspect.

According to a seventh aspect of embodiments herein, the object is achieved by a wireless communication device configured for enabling contention resolution of uplink transmissions at a radio network node. The wireless communication device is configured for sending an access request to the radio network node and for receiving an access grant from the radio network node. The wireless communication device is further configured for sending, to the radio network node, at least two data blocks. The at least two data blocks includes only one occurrence of a unique device ID and at least one occurrence of a reduced ID that is represented by fewer bits than the unique device ID.

According to an eight aspect of embodiments herein, the object is achieved by a radio network node configured for managing contention resolution of uplink transmissions. The radio network node is configured for receiving an access request from a wireless communication device and for sending an access grant to the wireless communication device. The radio network node is further configured for receiving, from the wireless communication device, at least two data blocks. The at least two data blocks includes only one occurrence of a unique device ID and at least one occurrence of a reduced ID that is represented by fewer bits than the unique device ID.

The various embodiments herein minimizes, or at least reduces, overhead during contention resolution by avoiding an overhead intense unique device ID taking up space from payload data, by combining the unique device ID with a reduced ID during the contention resolution procedure.

Embodiments herein minimizes, or reduces, overhead introduced by the unique device ID during contention resolution and thereby help to maximize, or at least increase, the utilization of data block payload space for delivering payload consisting of the protocol layers above the RLC/MAC layer.

For a device with limited power supply the efficient contention resolution described herein will also reduce device energy consumption and therefore increase the battery lifetime as well as helping to improve uplink transmission latency by keeping the number of RLC data blocks transmitted low.

### BRIEF DESCRIPTION OF THE DRAWINGS

Figure 1 illustrates a prior art method.
Figure 2 depicts an exemplifying network in which embodiments herein may be implemented.
Figure 3 illustrates exemplifying methods according to embodiments herein when implemented in the network of Figure 2.
Figure 4 shows a schematic flowchart of exemplifying methods in a wireless communication device.
Figure 5 is a schematic block diagram of embodiments of the wireless communication device.
Figure 6 shows a schematic flowchart of exemplifying methods in a radio network node.
Figure 7 is a schematic block diagram of embodiments of the radio network node.

### DETAILED DESCRIPTION

Throughout the following description similar reference numerals have been used to denote similar features, such as nodes, actions, steps, modules, circuits, parts, items elements, units or the like, when applicable. In the Figures, features that appear in some embodiments are indicated by dashed lines.

As part of the development towards embodiments herein, the situation and problems indicated in the Background will be further discussed.

In case the payload to be transmitted is very small such that all data blocks are transmitted (3 in Figure 1) before the response from the network is received (4 in Figure 1), the overhead increases significantly. In other words, the overhead represented by the inclusion of the unique device ID in all data blocks transmitted prior to reception of the first response expressed as percentage of the total payload space available within the full set of transmitted data blocks, increases significantly as the total payload decreases.

For example:
Assume network management of uplink data transmissions is such that the transmission of N data blocks needs to be attempted before the first response from the network will be sent. In more detail, the device can determine N based on how much data, i.e. payload, it would like to send. As such, at some point during the course of transmitting the N data blocks, a device can indicate the number of additional data blocks it has to send so that upon receiving the response from the network (4 in Figure 1) it can send the additional data blocks (using additional uplink packet resources granted by the network) without inclusion of the unique device ID.

Further assume the unique device ID takes up 4 bytes of space and the total payload space available per data block is 20 bytes.

Then for an uplink data transmission consisting of 500 bytes where N = 5, the overhead from the unique device ID is:
- Number of data blocks transmitted (with unique device ID only included in the first 5 data blocks) = (5*4+500)/20 = 26
- Number of data blocks transmitted with **no** unique device ID included = 26 - 5 = 21
- Unique Device ID Overhead: 20/520 = 4%

However, if instead a small data transmission consisting of a payload of 50 bytes is considered (where N = 4), the overhead from the unique device ID is:
- Number of blocks transmitted (with unique device ID included in all data blocks) = (4*4+50)/20 = 4 (rounded up to the nearest integer)
- Number of blocks transmitted with **no** unique device ID included = 0
- Unique Device ID Overhead: 16/66 = 24%

As such, it can be seen that the inclusion of the unique device ID in the first N data blocks of an uplink transmission represents an increasingly significant amount of overhead as the total number of data blocks is reduced and the network only sends a response after transmission of the first N data blocks has been attempted by the device.

Hence, the object of providing improvements regarding contention resolution may be achieved by increasing efficiency of procedure for contention resolution, such as decrease the overhead.

Embodiments and examples for achieving the object will now first be described in a generic fashion, thereafter embodiments will be discussed in further detail with reference to details in the appended drawings.

In a first embodiment, a unique device ID is only included in one of the first N data blocks transmitted, where N is the number of data blocks transmitted by a device before the network sends a response echoing the unique device ID of the device that 'won' the contention resolution. The unique device ID is unique in that the wireless communication device may be uniquely identified by the radio network node by use of this identification, i.e. the unique device ID may be unique on a per network/operator basis. The N-1 remaining blocks sent (transmitted) prior to the network sending a response include what is referred to as a reduced ID. The reduced ID is reduced in comparison to the unique device ID in that the reduced ID is represented by fewer bits than the unique device ID. The reduced ID may be intended to substantially increase the probability that two devices, after reading the same access grant message (2 in Figure 1) and both concluding they are the intended recipient of the packet resources allocated therein, when starting to transmit data blocks with a reduced ID to the network on the allocated packet resources, will be uniquely distinguishable by the network. In other words, the probability that these two devices will include the same value for the reduced ID is low thereby allowing the network to have high confidence that all data blocks with a reduced ID received prior to transmitting the response are from the same device. See also the first example below. In addition, the reduced ID may be a specific subset of the bits comprising the unique device ID (e.g. the 4 least significant bits of the unique device ID) thereby allowing the network to have high confidence that all data blocks received prior to transmitting the response are from the same device.

In one embodiment the unique device ID is e.g. the TLLI, IMSI, or P-TMSI and is transmitted in a Radio Link Control (RLC) data block in GSM/EDGE. In another embodiment the unique device ID e.g. the TLLI, is spread across several of the N data blocks while the reduced ID is carried in each of the data blocks. E.g. four bytes, representing the TLLI, may be included as one byte in each of the first four data blocks, or as 2 bytes in each data block if only 2 data blocks are transmitted or as 4 bytes if only one data block is to be transmitted. The received unique device ID (partial or full) together with the reduced ID will then be echoed back in the Packet Uplink Ack/Nack (PUAN) message to confirm reception of all transmitted blocks or to trigger re-transmission of additional blocks. If two or more devices are competing for resources and by coincidence have used the same reduced ID then the echoed unique device identity may actually consist of a mixture of two identities i.e. in constructing the full unique device ID the BSS may have used information received from two different devices without realizing it has done so since each device sends data blocks that include the same reduced ID. In such a case, none of the devices trying to make access will recognize the echoed identity which in turn would trigger the devices to go back to the RACH to make another access attempt. If the echoed unique device ID in the PUAN corresponds to one of the devices the contention resolution process is considered to be successfully completed. In the event that only a partial identity has been received and is echoed back to the MS in the PUAN by the BSS, the reduced ID will be used as means to further separate the competing devices. The PUAN will trigger the device with the correct partial unique device ID and the reduced ID to re-transmit the remaining outstanding data block(s). When all data blocks have been received the full identity will be echoed back in the final PUAN to complete the contention resolution process. See also second example in the detailed description. In another embodiment, the reduced ID is a sub-set of the TLLI bits, for example the 4 least significant bits, or a pseudo randomly chosen bit sequence e.g. a simple 4 bit random number such that the probability of two devices selecting the same reduced ID is 1 in 16.

The various embodiments herein minimizes, or at least reduces, overhead during contention resolution by avoiding an overhead intense unique device ID taking up space from payload data, by combining the unique device ID with a reduced ID during the contention resolution procedure.

Embodiments herein minimizes, or reduces, overhead introduced by the unique device ID during contention resolution and thereby help to maximize, or at least increase, the utilization of data block payload space for delivering payload consisting of the protocol layers above the RLC/MAC layer.

For a device with limited power supply the efficient contention resolution described herein will also reduce device energy consumption and therefore increase the battery lifetime as well as helping to improve uplink transmission latency by keeping the number of RLC data blocks transmitted low.

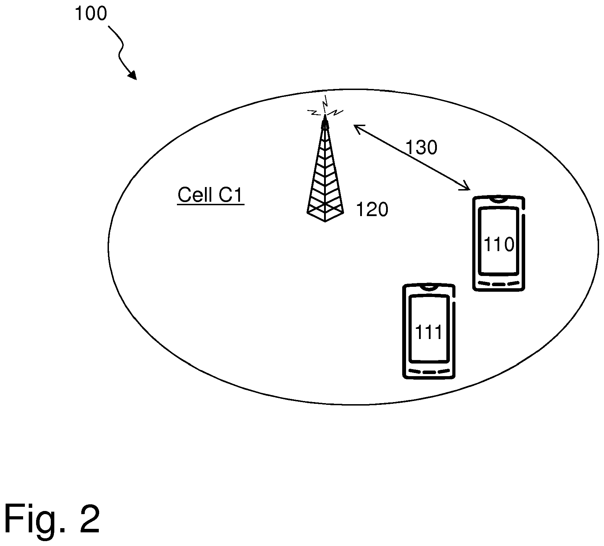

**Figure 2** depicts an exemplifying **network 100** in which embodiments herein may be implemented. In this example, the network 100 is a GSM network, for example GSM/EDGE.

In other examples, the network 100 may be any cellular or wireless communication system, such as a Long Term Evolution (LTE), Universal Mobile Telecommunication System (UMTS), that make use of a contention resolution mechanism whereby an initial access attempt sent on the RACH does not uniquely identify the accessing device and therefore requires supplemental information from the device that uniquely identifies it and a response from the network confirming recognition of that unique device identity at some point after reception of the supplemental information.

The network 100 may be said to comprise a **wireless communication device 110.** This means that the wireless communication device 110 is present in the cellular network 100.

Furthermore, **a radio network node 120** is shown in Figure 2. The cellular network 100 may comprise the radio network node 120. In some examples, the wireless communication device 110 and a further wireless communication device 111 requests access to the radio network node 120. The radio network node 120 may operate **a cell C1,** in which the wireless communication device 110 may be located.

The radio network node 120 may communicate with the wireless communication device 110 over **a radio interface 130.** This communication may include user plane transmissions and/or control transmissions. The user transmissions may include user data, payload data, content data etc. The control transmissions may include control information relating to e.g. scheduling, authentication, mobility etc. The user plane transmissions are only relevant in case the first wireless communication device is in a cellular mode. The communication may include uplink transmission and/or downlink transmission. A user plane transmission may be referred to as a data block. As used herein, the term "data block" refers to a RLC layer Packet Data Unit (PDU) that contains some portion of or all of a higher layer PDU such that a single higher layer PDU may be carried over the radio interface using one or more RLC layer PDUs.

As used herein, the term "radio network node" may refer to a Base Station System (BSS), a Radio Network Controller (RNC), a Radio Base Station (RBS), an evolved Node B (eNB), a control node controlling one or more Remote Radio Units (RRUs), an access point or the like.

As used herein, the term "wireless communication device" may refer to a user equipment, a machine-to-machine (M2M) device, a mobile phone, a cellular phone, a Personal Digital Assistant (PDA) equipped with radio communication capabilities, a smartphone, a laptop or personal computer (PC) equipped with an internal or external mobile broadband modem, a tablet PC with radio communication capabilities, a portable electronic radio communication device, a sensor device equipped with radio communication capabilities or the like. The sensor may be any kind of weather sensor, such as wind, temperature, air pressure, humidity etc. As further examples, the sensor may be a light sensor, an electronic or electric switch, a microphone, a loudspeaker, a camera sensor etc. The term "user" may indirectly refer to the wireless communication device. Sometimes, the term "user" may be used to refer to the user equipment or the like as above. It shall be understood that the user may not necessarily involve a human user. The term "user" may also refer to a machine, a software component or the like using certain functions, methods and similar.

The embodiments herein are applicable to Machine-to-Machine (M2M) communication, Machine Type Communication (MTC) and the like.

The following terms are used herein:
"Unique device identity", "unique device ID", which uniquely identifies the wireless communication device 110.
"Reduced identity" and "reduced ID", which do not uniquely identify the wireless communication device 110.
"Identifier for identification of the wireless communication device 110", which is an example of minimal amount of information provided in an access request.

The unique device ID may be referred to as a first ID and the reduced ID may be referred to as a second ID. A number of bits of the second ID may be less than a number of bits of the first ID. The number of bits of the first and second IDs refers to respective number of bits used for representing the first and second ID, respectively.

"Data block" may be a physical unit transmitted over the air, while "packet resource" may more generally refers to resources used for transfer of data between the wireless communication device 110 and the radio network node 120.

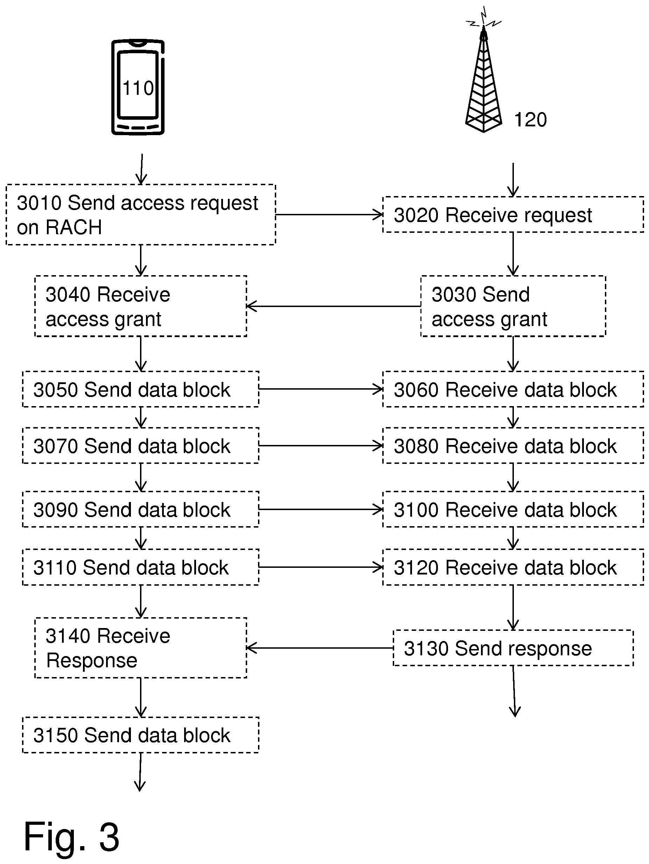

**Figure 3** illustrates an exemplifying method according to embodiments herein when implemented in the network 100 of Figure 2. The wireless communication device 110 may perform a method for enabling contention resolution. In this manner, the wireless communication device 110 may determine whether or not it is the intended recipient of packet resources allocated by the network for the purpose of uplink user plane transmission upon reception of a response in action 3140. The radio network node 120, such as BaseStationSystem (BSS), may perform a method for managing contention resolution of uplink transmissions. In this manner, the radio network node 120 may determine the unique device identity of the wireless communication device 110 that is the intended recipient of packet resources it has allocated for the purpose of uplink user plane transmissions.

One or more of the following actions may be performed in any suitable order.

### Action 3010

The wireless communication device 110 sends an access request, e.g. an Initial access attempt on RACH. The access request, such as an access burst, may include an identifier for non-unique identification of the wireless communication device 110. This means that inclusion of this identifier in the access request does also not uniquely identify the wireless communication device 110 when the radio network node 120 receives the access request.

However, in order to provide means for further distinguishing initial access requests sent by wireless communication devices in the network 100, the request, or the identifier, may include one or more of an indication of number of data blocks the wireless communication device 110 has to send, N, the downlink coverage class, DL_CC, of wireless communication device 110 and the like.

### Action 3020

Subsequent to action 3010, the radio network node 120 receives the access request.

### Action 3030

In response to action 3020, the radio network node 120 sends an access grant, such as an immediate assignment message. The access grant may include the identifier and/or DL_CC received in the access request the radio network node 120 is responding to. In this manner, the radio network node 120 echoes the identifier within the access grant. The radio network node may also allocate packet resources according to the value of N indicated in the access request. As a consequence of action 3030, the radio network node 120 assigns some specific resources, such as the packet resources, radio channel and/or time/frequency resource, for use by the wireless communication device 110.

Since the identifier does not uniquely identify the wireless communication device 110, it may happen that another wireless communication device 111 also believes it is the intended recipient of the access grant.

### Action 3040

Subsequent to action 3030, the wireless communication device 110 receives the access grant. In this manner, the wireless communication device 110 is made aware of on which resources it shall transmit its payload data, e.g. in terms of data blocks. Since the access grant may include the identifier or similar, the wireless communication device 110 concludes that it is the intended recipient of the access grant.

### Action 3050/3060 to Action 3110/3120

The wireless communication device 110 sends at least one data block including at least a portion of a total payload and the radio network node 120 receives the at least one data block. In some examples, the at least one data block comprises at least two data blocks. The portion of the total payload to be sent to the radio network node 120 before action 3130/3140 may be determined from N.

In these actions, the wireless communication device 110 may send the unique device ID only once and a reduced ID at least once if there is at least two data blocks, i.e. payload available in the wireless communication device 110 requires at least two data blocks in order to be transmitted. This means that when the wireless communication device 110 may send the at least two data blocks, the at least two data blocks comprises only one occurrence of the unique device ID and at least one occurrence of the reduced ID. The unique device ID may be included in one or both of the at least two data blocks. This is in contrast to prior art in which the unique device ID is included in all data block sent prior to reception of the response in action 3140.

In some examples, the reduced ID may be said to provide semi-unique identification of the wireless communication device 110, e.g. unique identification by a certain probability.

In a first example, a first data block of the at least two data blocks comprises the unique device ID and a second data block of the at least two data blocks comprises the reduced ID. Expressed differently, a first data block of said at least two data blocks includes said one occurrence of the unique device ID, wherein a second data block of said at least two data blocks includes said at least one occurrence of the reduced ID. As an example, the first data block is indeed, in time order among the at least two data blocks, the first data block sent by the wireless communication device 110 and the second data block is indeed, in time order among the at least two data blocks, the second data block sent by the wireless communication device 110. In other examples, the order may refer to block sequence order or similar.

In a second example, the unique device ID consists of a first portion and a second portion of bits. Preferably, the unique device ID is split up into equal portions, wherein each portion consists of a number of bits given by a number of bits of the unique device ID divided by a number of data blocks, N, that the wireless communication device 110 has requested access with. Then, the first data block of the at least two data blocks comprises a first portion of the unique device ID and the reduced ID and the second data block of the at least two data blocks comprises a second portion of the unique device ID and the reduced ID. The first and second portion forms the unique device ID, which then is complete in case that N = 2. As shall be referred to below, the complete unique device ID may be split up into a number of respective portions thereof.

In one embodiment, the reduced ID is included within control bit information space, for example, the RLC/MAC header of a radio block, or data block, in GSM/EDGE, thereby avoiding the need to use data block payload space to identify the reduced ID. Notably, the control bit information space is not static, i.e. the amount of and which physical radio resources that are used as control bit information space depends e.g. on the size in bits of the RLC/MAC header.

In another embodiment, the presence of the reduced ID is signaled within control bit information space, for example, the RLC/MAC header of a radio block in GSM/EDGE. The signaling of the presence of the reduced TLLI field could for example be a single bit indicator in the control bit information that indicates that specific parts of the control bit information space are used to convey the reduced device ID. Thus, in this embodiment, the reduced ID may thus be included within the control bit information space.

In some embodiments, said one occurrence of the unique device ID includes said one occurrence of the reduced ID. This means that the reduced ID may be derived from the unique device ID by the radio network node 120. For example, thanks to that it may be preconfigured which specific sub-set, or parts, of the unique device ID that may form the reduced ID.

In some embodiments, said at least one occurrence of the reduced ID is excluded from said one occurrence of the unique device ID. This means that the radio network node 120 is not able to derive the reduced ID from the unique device ID. Thus, the wireless communication device 110 may in some data blocks inform the radio network node 120 of both the unique device ID and the reduced ID, whereby the radio network node 120 interprets it as this unique device ID and this reduced ID are associated with each other.

In some embodiments, the first data block is first in order among the at least two data blocks, and wherein the second data block is second in order among the at least two data blocks.

In yet another embodiment, the reduced ID consists of a random number. With the first example, the reduced ID is then included also in the data block where the unique device ID is included. That enables the network to determine what reduced ID that is connected to, or associated with, a specific unique device ID.

Now actions 3050/3060 to 3110/3120 will be described in more detail individually.

### Action 3050/3060

According to the first example above, the wireless communication device 110 sends, to the radio network node 120, the first data block. The first data block includes the unique device ID. Consequently, the radio network node 120 receives the above mentioned first data block from the wireless communication device 110.

According to the second example above, the wireless communication device 110 sends, to the radio network node 120, the first data block. The first data block includes the respective portion of the unique device ID, not the complete unique device ID, and the reduced ID. Consequently, the radio network node 120 receives the above mentioned first data block from the wireless communication device 110.

In action 3050, the wireless communication device 110 may generate the first data block based on the number of data blocks N to send. For example, the wireless communication device 110 may choose to apply the embodiments herein when N is greater than or equal to two. Then, the wireless communication device 110 may select one embodiment to apply, e.g. the first example, the second example, or other example as disclosed herein. As detailed below in section "specific implementations", a so called spare bit of a header of the data block, e.g. an RLC/MAC header for GSM/EDGE, may indicate to the radio network node 120 that one or more embodiments herein is applied to the data blocks to be sent. In case it is foreseen that several embodiments may be implemented at the same time, the data block may also comprise information about which embodiment is applied, e.g. by a version number of the like. When the wireless communication device 110 generates the data block, the spare bit may be assigned the value of "1" from which the radio network node 120 may conclude that e.g. the Countdown Value field includes the reduced ID, i.e. the value thereof.

The wireless communication device 110 thus generates the data block in accordance with formats known, e.g. by agreement, standard specifications and the like, to the radio network node 120.

### Action 3070/3080

According to the first example above, the wireless communication device 110 sends, to the radio network node 120, the second data block. The second data block includes the reduced ID. Consequently, the radio network node 120 receives the above mentioned second data block from the wireless communication device 110.

According to the second example above, the wireless communication device 110 sends, to the radio network node 120, the second data block. The second data block includes (another) respective portion of the unique device ID and the reduced ID. Consequently, the radio network node 120 receives the above mentioned second data block from the wireless communication device 110. In case N=2, the radio network node 120 may now construct the complete unique device ID from the two respective portions thereof, i.e. the first and second portions mentioned above, that have been received.

Again, the wireless communication device may generate the data block, e.g. while considering the selected embodiment.

Now extending the examples to cases where N is greater than two. When these actions are performed, it implies that N is at least three.

### Action 3090/3100

According to the first example above, the wireless communication device 110 sends, to the radio network node 120, a third data block. Again, the third data block is indeed the third, in order among a set of N data blocks. The third data block includes the reduced ID. Consequently, the radio network node 120 receives the above mentioned third data block from the wireless communication device 110.

According to the second example above, the wireless communication device 110 sends, to the radio network node 120, a third data block. Again, the third data block is indeed the third, in order among a set of N data blocks. The third data block includes a respective portion of the unique device ID and the reduced ID. Consequently, the radio network node 120 receives the above mentioned third data block from the wireless communication device 110. Again, in case N=3, the radio network node 120 may now construct the complete unique device ID from the three respective portions thereof that have been received.

### Action 3110/3120

According to the first example above, the wireless communication device 110 sends, to the radio network node 120, a fourth data block. Again, the fourth data block is indeed the fourth, in order among a set of N data blocks. The fourth data block includes the reduced ID. Consequently, the radio network node 120 receives the above mentioned fourth data block from the wireless communication device 110.

According to the second example above, the wireless communication device 110 sends, to the radio network node 120, a fourth data block. Again, the fourth data block is indeed the fourth, in order among a set of N data blocks. The fourth data block includes a respective portion of the unique device ID and the reduced ID. Consequently, the radio network node 120 receives the above mentioned fourth data block from the wireless communication device 110. Again, in case N=4, the radio network node 120 may now construct the complete unique device ID from the four respective portions thereof that have been received.

Etc. for any value of N up to and including N = 16, or other value as given by a relevant standard specification.

In actions 3060, 3080, 3100, 3120, the radio network node 120 may interpret the data blocks received. In this manner, the radio network node 120 may find out whether or not the at least two data blocks, or all data blocks, are received from the same wireless communication device.

For example, in case the reduced ID is a specific subset of bits from the unique device ID, the radio network node 120 matches the specific subset of bits to the reduced ID. If N data blocks match, then the radio network node 120 may conclude that these data blocks are from the intended recipient of the access grant. Hence, action A130 below is performed.

In case - as mentioned above - the unique device ID is split into portions, where each portion is included in a respective data block, the radio network node 120 may interpret several received data blocks in order to build the unique device ID. Each data block also comprises the reduced ID in this example. Again, the radio network node may check reduced ID and unique ID to find out if the received data blocks are from the same wireless communication device 110.

### Action 3130

The radio network node 120 sends a response. The response comprises the unique device ID and possibly the reduced ID. The response may be a PUAN message or the like. In this manner, the radio network node 120 makes the wireless communication device 110 aware of that it won the "contention resolution", i.e. the access grant was in fact intended to be received by it.

### Action 3140

Subsequent to action 3130, the wireless communication device 110 receives the response.

### Action 3150

According to the first example and second example, the wireless communication device 110 sends at least one further data block, wherein the unique device ID and the reduced ID are excluded from the at least one further data block. When further data blocks are sent post reception of the PUAN message, then data blocks exclude the unique device ID and the reduced ID, since at this point the wireless communication device 110 has concluded that it was won contention resolution.

Specific implementations for General Packet Radio Service (GPRS) and Enhanced GPRS (EGPRS) could be as follows:
- For the case of legacy uplink GPRS data blocks, a spare bit set to '0' can indicate that the 4 bit Countdown Value field is present and continues to have its legacy meaning whereas when the spare bit set to '1' it can indicate that the 4 bit Countdown Value field is a reduced ID field comprising a reduced ID. This allows the BSS, aka the radio network node, to receive the first uplink GPRS data block with both a TLLI field and the Countdown Value field and thereby establish a relationship between Block Sequence Number (BSN) and the Countdown Value such that for all subsequent uplink GPRS data blocks the value for Countdown Value can be implied by the BSN value (thereby allowing the reduced ID value to be indicated instead of the Countdown Value in these subsequent data blocks without the BSS experiencing any loss of knowledge). With reference to the first example, it is therefore not until the radio network node 120 receives the second data block, in which the spare bit is set to '1', that it detects that more efficient contention resolution can be used. For example, it may be predefined, as given by a standard specification, which bits of the unique device ID that forms the reduced ID. Thus, the radio network node will send the PUAN message, including the unique device ID, when N data blocks have been received by the radio network node 120.
- For the case of legacy uplink EGPRS data blocks this same approach of using a spare bit to indicate when the 4 bit Countdown Value field is present or when it is replaced by a reduced ID field can be used. The availability of at least 1 spare bit can be ensured for legacy uplink EGPRS data blocks by requiring that the Fast Ack/Nack Reporting (FANR) feature is not activated when using efficient contention resolution.

Taking the example from section "problems" above and applying the embodiment that the reduced ID is included in control information space results in only overhead from unique device ID inclusion in the first data block:
500 byte transmission:
   - Number of blocks transmitted (with unique device ID only included in one of the first 5 data blocks) = (1*4+500)/20 = 26 (rounded up to the nearest integer)
   - Number of blocks transmitted with **no** unique device ID included = 26 - 1 = 25
   - Unique Device ID Overhead: 4/504 = 0.8%
50 byte transmission:
   - Number of blocks transmitted (with unique device ID only included in one of the first 3 data blocks) = (1*4+50)/20 = 3 (rounded up to the nearest integer)
   - Number of blocks transmitted with **no** unique device ID included = 3 - 1 = 2
   - Unique Device ID Overhead: 4/54 = 7.4%

For the 500 byte data transmission case the overhead is reduced from 4% to 0.8% whereas for the 50 byte data transmission case the overhead is reduced from 24% to 7.4% and the amount of transmitted data blocks is decreased from 4 to 3.

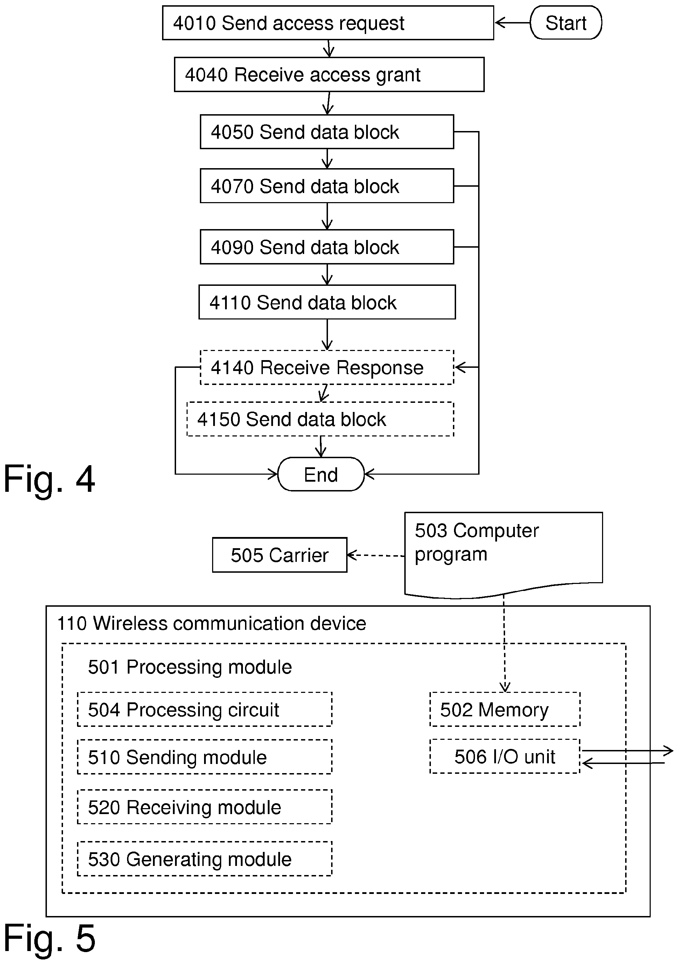

In **Figure 4****,** a schematic flowchart of exemplifying methods in, such as performed by, the wireless communication device 110 is shown. The methods are for enabling contention resolution of uplink transmissions at the radio network node 120.

Again, the same reference numerals as above have been used to denote the same or similar features, in particular the same reference numerals have been used to denote the same or similar actions.

Reference is made to the flowchart of Figure 4, in which one or more of the illustrated actions may be performed. The actions shown will now be discussed.

### Action 4010

The wireless communication device 110 sends an access request to the radio network node 120.

This action may thus fully or partly correspond to Action 3010 discussed above in connection with Figure 3.

### Action 4040

The wireless communication device 110 receives an access grant from the radio network node 120.

This action may thus fully or partly correspond to Action 3040 discussed above in connection with Figure 3.

### Actions 4050 to 4110

The wireless communication device 110 sends, to the radio network node 120, at least two data blocks, wherein the at least two data blocks includes only one occurrence of a unique device ID and at least one occurrence of a reduced ID that is represented by fewer bits than the unique device ID.

Said one occurrence of the unique device ID may include one occurrence of said at least one occurrence of the reduced ID. Alternatively, said at least one occurrence of the reduced ID may be excluded from said one occurrence of the unique device ID.

A first data block, e.g. the data block sent in Action 4050, of said at least two data blocks may include said one occurrence of the unique device ID, and a second data block, e.g. the data block sent in Action 4070, of said at least two data blocks may include one of said at least one occurrence of the reduced ID. Hence, the first data block may be first in order, or in other words first in time, among the at least two data blocks, and the second data block may be second in order among the at least two data blocks.

The unique device ID may be sent in a RLC data block, and the unique device ID may be a TLLI. The reduced ID may in this case be a subset of bits of the TLLI.

Further, the reduced ID may be included within a RLC/MAC header of a data block.

These actions may thus fully or partly correspond to Actions 3050-3110 discussed above in connection with Figure 3.

### Action 4140

This action may thus fully or partly correspond to Action 3140 discussed above in connection with Figure 3.

### Action 4150

This action may thus fully or partly correspond to Action 3150 discussed above in connection with Figure 3.

With reference to **Figure 5**, a schematic block diagram of embodiments of the wireless communication device 110 of Figure 2 is shown.

The wireless communication device 110 may comprise a **processing module 501,** such as a means, one or more hardware modules and/or one or more software modules for performing the methods described herein.

The wireless communication device 110 may further comprise **a memory 502.** The memory may comprise, such as contain or store, **a computer program 503.**

According to some embodiments herein, the processing module 501 comprises, e.g. 'is embodied in the form of' or 'realized by', **a processing circuit 504** as an exemplifying hardware module. In these embodiments, the memory 502 may comprise the computer program 503, comprising computer readable code units executable by the processing circuit 504, whereby the wireless communication device 110 is operative to perform the methods of Figure 3 and/or Figure 4.

In some other embodiments, the computer readable code units may cause the wireless communication device 110 to perform the method according to Figure 3 and/or 4 when the computer readable code units are executed by the wireless communication device 110.

Figure 5 further illustrates **a carrier 505,** or program carrier, which comprises the computer program 503 as described directly above.

In some embodiments, the processing module 501 comprises **an Input/Output unit 506,** which may be exemplified by a receiving module and/or a sending module as described below when applicable.

In further embodiments, the processing module 501 may comprise one or more of **a sending module 510, a receiving module 520, a generating module 530** as exemplifying hardware modules. In other examples, one or more of the aforementioned exemplifying hardware modules may be implemented as one or more software modules.

Accordingly, the wireless communication device 110 is configured for enabling contention resolution of uplink transmissions at the radio network node 120.

Therefore, according to the various embodiments described above, the wireless communication device 110, the processing module 501 and/or the sending module 510 is configured for sending an access request to the radio network node 120.

Furthermore, the wireless communication device 110, the processing module 501 and/or the receiving module 520 is configured for receiving an access grant from the radio network node 120.

Moreover, the wireless communication device 110, the processing module 501 and/or the sending module 510, or another sending module (not shown), is configured for sending, to the radio network node 120, at least two data blocks, wherein the at least two data blocks includes only one occurrence of a unique device ID and at least one occurrence of a reduced ID that is represented by fewer bits than the unique device ID.

In some embodiments, said one occurrence of the unique device ID includes one of said at least one occurrence of the reduced ID.

In some embodiments, said at least one occurrence of the reduced ID is excluded from said one occurrence of the unique device ID.

A first data block of said at least two data blocks may include said one occurrence of the unique device ID and a second data block of said at least two data blocks may include one of said at least one occurrence of the reduced ID.

The first data block may be first in order among the at least two data blocks, and the second data block may be second in order among the at least two data blocks.

The wireless communication device 110, the processing module 501 and/or the sending module 510 may be configured to send the unique device ID in a RLC data block, and the unique device ID may be a TLLI. The reduced ID may in this case be a subset of bits of the TLLI.

Further, the reduced ID may be included within a RLC/MAC header of a data block.

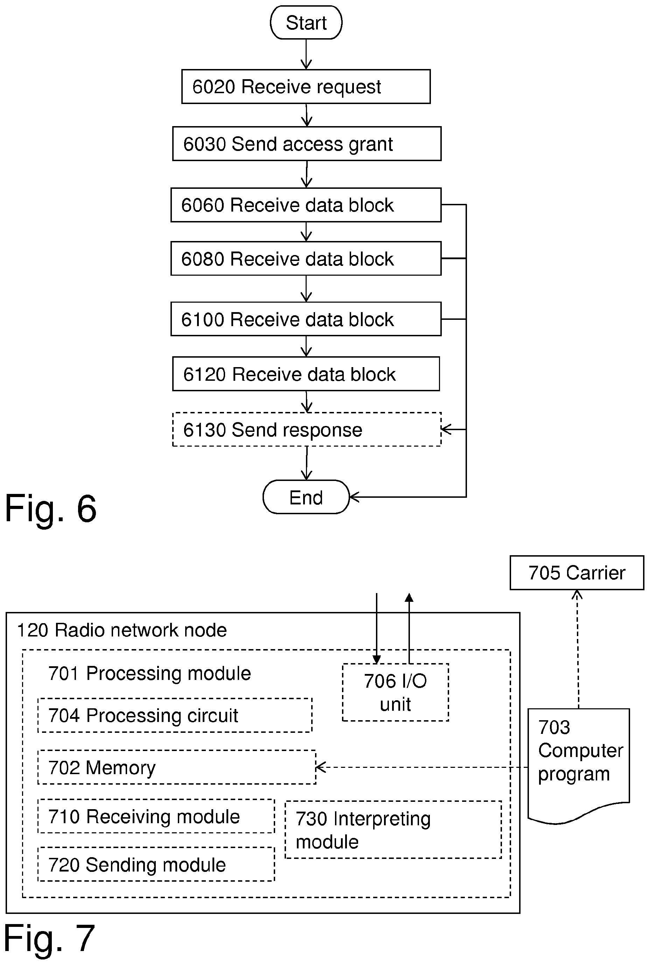

In **Figure 6****,** a schematic flowchart of exemplifying methods in, such as performed by, the radio network node 120 is shown. The methods are for managing contention resolution of uplink transmissions. Again, the same reference numerals as above have been used to denote the same or similar features, in particular the same reference numerals have been used to denote the same or similar actions.

Reference is made to the flowchart of Figure 6, in which one or more of the illustrated actions may be performed. The actions shown will now be discussed.

### Action 6020

The radio network node 120 receives an access request from the wireless communication device 110.

This action may thus fully or partly correspond to Action 3020 discussed above in connection with Figure 3.

### Action 6030

The radio network node 120 sends an access grant to the wireless communication device 110.

This action may thus fully or partly correspond to Action 3030 discussed above in connection with Figure 3.

### Actions 6060 to 6120

The radio network node 120 receives, from the wireless communication device 110, at least two data blocks, wherein the at least two data blocks includes only one occurrence of a unique device ID and at least one occurrence of a reduced ID that is represented by fewer bits than the unique device ID.

Said one occurrence of the unique device ID may include one occurrence of said at least one occurrence of the reduced ID. Alternatively, said at least one occurrence of the reduced ID may be excluded from said one occurrence of the unique device ID.

A first data block, e.g. the data block received in Action 6060, of said at least two data blocks may include said one occurrence of the unique device ID, and a second data block, e.g. the data block sent in Action 6080, of said at least two data blocks may include one of said at least one occurrence of the reduced ID. Hence, the first data block may be first in order, or in other words first in time, among the at least two data blocks, and the second data block may be second in order among the at least two data blocks.

The unique device ID may be received in a RLC data block and the unique device ID may be a TLLI. The reduced ID may in this case be a subset of bits of the TLLI.

Further, the reduced ID may be included within a RLC/MAC header of a data block.

These actions may thus fully or partly correspond to Actions 3060-3120 discussed above in connection with Figure 3.

### Action 6130

This action may thus fully or partly correspond to Action 3130 discussed above in connection with Figure 3.

With reference to **Figure 7****,** a schematic block diagram of embodiments of the radio network node 120 of Figure 2 is shown.

The radio network node 120 may comprise **a processing module 701,** such as a means, one or more hardware modules and/or one or more software modules for performing the methods described herein.

The radio network node 120 may further comprise **a memory 702.** The memory may comprise, such as contain or store, **a computer program 703.**

According to some embodiments herein, the processing module 701 comprises, e.g. 'is embodied in the form of' or 'realized by', **a processing circuit 704** as an exemplifying hardware module. In these embodiments, the memory 702 may comprise the computer program 703, comprising computer readable code units executable by the processing circuit 704, whereby the radio network node 120 is operative to perform the methods of Figure 3 and/or Figure 6.

In some other embodiments, the computer readable code units may cause the radio network node 120 to perform the method according to Figure 3 and/or 6 when the computer readable code units are executed by the radio network node 120.

Figure 7 further illustrates **a carrier 705,** or program carrier, which comprises the computer program 703 as described directly above.

In some embodiments, the processing module 701 comprises **an Input/Output unit 706,** which may be exemplified by a receiving module and/or a sending module as described below when applicable.

In further embodiments, the processing module 701 may comprise one or more of **a receiving module 710, a sending module 720, an interpreting module 730,** as exemplifying hardware modules. In other examples, one or more of the aforementioned exemplifying hardware modules may be implemented as one or more software modules.

Accordingly, the radio network node 120 is configured for managing contention resolution of uplink transmissions.

Therefore, according to the various embodiments described above, the radio network node 120, the processing module p601 and/or the receiving module p610 is configured for receiving an access request from a wireless communication device 110.

Furthermore, the radio network node 120, the processing module p601 and/or the sending module 720 is configured for sending an access grant to the wireless communication device 110.

Moreover, the radio network node 120, the processing module 701 and/or the receiving module 710 is configured for receiving, from the wireless communication device 110, at least two data blocks, wherein the at least two data blocks includes only one occurrence of a unique device ID and at least one occurrence of a reduced ID that is represented by fewer bits than the unique device ID.

In some embodiments, said one occurrence of the unique device ID includes one occurrence of said at least one occurrence of the reduced ID.

In some embodiments, said at least one occurrence of the reduced ID is excluded from said one occurrence of the unique device ID.

A first data block of said at least two data blocks may include said one occurrence of the unique device ID and a second data block of said at least two data blocks may include one of said at least one occurrence of the reduced ID.

The first data block may be first in order among the at least two data blocks, and the second data block may be second in order among the at least two data blocks.

The radio network node 120, the processing module 701 and/or the receiving module 710 may be configured for receiving the unique device ID in a RLC data block in and the unique device ID may be a TLLI. The reduced ID may in this case be a subset of bits of the TLLI.

Further, the reduced ID may be included within a RLC/MAC header of a data block.

As used herein, the term "node", or "network node", may refer to one or more physical entities, such as devices, apparatuses, computers, servers or the like. This may mean that embodiments herein may be implemented in one physical entity. Alternatively, the embodiments herein may be implemented in a plurality of physical entities, such as an arrangement comprising said one or more physical entities, i.e. the embodiments may be implemented in a distributed manner.

As used herein, the term "unit" may refer to one or more functional units, each of which may be implemented as one or more hardware modules and/or one or more software modules in a node.

As used herein, the term "program carrier", or "carrier", may refer to one of an electronic signal, an optical signal, a radio signal, and a computer readable medium. In some examples, the program carrier may exclude transitory, propagating signals, such as the electronic, optical and/or radio signal. Thus, in these examples, the carrier may be a non-transitory carrier, such as a non-transitory computer readable medium.

As used herein, the term "processing module" may include one or more hardware modules, one or more software modules or a combination thereof. Any such module, be it a hardware, software or a combined hardware-software module, may be a determining means, estimating means, capturing means, associating means, comparing means, identification means, selecting means, receiving means, sending means or the like as disclosed herein. As an example, the expression "means" may be a module corresponding to the modules listed above in conjunction with the Figures.

As used herein, the term "software module" may refer to a software application, a Dynamic Link Library (DLL), a software component, a software object, an object according to Component Object Model (COM), a software component, a software function, a software engine, an executable binary software file or the like.

As used herein, the term "processing circuit" may refer to a processing unit, a processor, an Application Specific integrated Circuit (ASIC), a Field-Programmable Gate Array (FPGA) or the like. The processing circuit or the like may comprise one or more processor kernels.

As used herein, the expression "configured to/for" may mean that a processing circuit is configured to, such as adapted to or operative to, by means of software configuration and/or hardware configuration, perform one or more of the actions described herein.

As used herein, the term "action" may refer to an action, a step, an operation, a response, a reaction, an activity or the like.

As used herein, the term "memory" may refer to a hard disk, a magnetic storage medium, a portable computer diskette or disc, flash memory, random access memory (RAM) or the like. Furthermore, the term "memory" may refer to an internal register memory of a processor or the like.

As used herein, the term "computer readable medium" may be a Universal Serial Bus (USB) memory, a DVD-disc, a Blu-ray disc, a software module that is received as a stream of data, a Flash memory, a hard drive, a memory card, such as a MemoryStick, a Multimedia Card (MMC), Secure Digital (SD) card, etc.

As used herein, the term "computer readable code units" may be text of a computer program, parts of or an entire binary file representing a computer program in a compiled format or anything there between.

As used herein, the term "radio resource", or "packet resource", or "resource", may refer to a certain coding of a signal and/or a time frame and/or a frequency range in which the signal is transmitted. In some examples, a resource may refer to one or more Physical Resource Blocks (PRB) which is used when transmitting the signal. In more detail, a PRB may be in the form of Orthogonal Frequency Division Multiplexing (OFDM) PHY resource blocks (PRB). The term "physical resource block" is known from 3GPP terminology relating to e.g. Long Term Evolution Systems. In GPRS/EDGE the term "packet resource" can refer to a set of one or more transmission opportunities uniquely assigned to one device on a radio channel wherein each transmission opportunity consists of a specific set of 4 bursts of an assigned timeslot.

As used herein, the terms "number" and/or "value" may be any kind of digit, such as binary, real, imaginary or rational number or the like. Moreover, "number" and/or "value" may be one or more characters, such as a letter or a string of letters. "Number" and/or "value" may also be represented by a bit string.

As used herein, the term "set of" may refer to one or more of something. E.g. a set of devices may refer to one or more devices, a set of parameters may refer to one or more parameters or the like according to the embodiments herein.

As used herein, the expression "in some embodiments" has been used to indicate that the features of the embodiment described may be combined with any other embodiment disclosed herein.

Even though embodiments of the various aspects have been described, many different alterations, modifications and the like thereof will become apparent for those skilled in the art. The described embodiments are therefore not intended to limit the scope of the present disclosure.

## Claims

1. A method, performed by a wireless communication device (110), for enabling contention resolution of uplink transmissions at a radio network node (120), the method comprises:
*sending (3010; 4010)* an access request to the radio network node (120);
*receiving (3040; 4040)* an access grant from the radio network node (120); and *sending (3050-3110; 4050-4110),* to the radio network node (120), at least two data blocks, **characterized in that** the at least two data blocks includes only one occurrence of a unique device identity "ID" and at least one occurrence of a reduced ID that is represented by fewer bits than the unique device ID and wherein the reduced ID is included within a Radio Link Control, "RLC", and/or Medium Access Control, "MAC", header of a data block.

2. The method as claimed in claim 1 wherein a first data block of said at least two data blocks includes said one occurrence of the unique device ID, wherein a second data block of said at least two data blocks includes one of said at least one occurrence of the reduced ID.

3. The method as claimed in any one of claims 1-2, wherein the unique device ID is sent in a Radio Link Control, "RLC", data block and the unique device ID is a Temporary Logic Link Identifier, "TLLI".

4. The method as claimed in claim 3, wherein the reduced ID is a subset of bits of the TLLI.

5. A method, performed by a radio network node (120), for managing contention resolution of uplink transmissions,
*receiving (3020; 6020)* an access request from a wireless communication device (110);
*sending (3030; 6030)* an access grant to the wireless communication device (110); and
*receiving (3060-3120; 6060-6120),* from the wireless communication device (110), at least two data blocks, **characterized in that** the at least two data blocks includes only one occurrence of a unique device identity "ID" and at least one occurrence of a reduced ID that is represented by fewer bits than the unique device ID and wherein the reduced ID is included within a Radio Link Control, "RLC", and/or Medium Access Control, "MAC", header of a data block..

6. The method as claimed in claim 5, wherein a first data block of said at least two data blocks includes said one occurrence of the unique device ID, wherein a second data block of said at least two data blocks includes one of said at least one occurrence of the reduced ID.

7. The method as claimed in any one of claims 5-6, wherein the unique device ID is received in a Radio Link Control, "RLC", data block and the unique device ID is a Temporary Logic Link Identifier, "TLLI".

8. The method as claimed in claim 7, wherein the reduced ID is a subset of bits of the TLLI.

9. A wireless communication device (110) configured for enabling contention resolution of uplink transmissions at a radio network node (120), wherein the wireless communication device (110) is configured for:
sending (3010; 4010) an access request to the radio network node (120);
receiving (3040; 4040) an access grant from the radio network node (120); and
sending (3050-3110; 4050-4110), to the radio network node (120), at least two data blocks, **characterized in that** the at least two data blocks includes only one occurrence of a unique device identity "ID" and at least one occurrence of a reduced ID that is represented by fewer bits than the unique device ID and wherein the reduced ID is included within a Radio Link Control, "RLC", and/or Medium Access Control, "MAC", header of a data block..

10. The wireless communication device (110) as claimed in claim 9, wherein said one occurrence of the unique device ID includes one occurrence of said at least one occurrence of the reduced ID.

11. The wireless communication device (110) as claimed in claim 9, wherein said at least one occurrence of the reduced ID is excluded from said one occurrence of the unique device ID.

12. The wireless communication device (110) as claimed in any one of claims 10-11, wherein a first data block of said at least two data blocks includes said one occurrence of the unique device ID, wherein a second data block of said at least two data blocks includes one of said at least one occurrence of the reduced ID.

13. The wireless communication device (110) as claimed in claim 12, wherein the first data block is first in order among the at least two data blocks, and wherein the second data block is second in order among the at least two data blocks.

14. The wireless communication device (110) as claimed in any one of claims 9-13, wherein the wireless communication device (110) is configured to send the unique device ID is sent in a Radio Link Control, "RLC", data block and the unique device ID is a Temporary Logic Link Identifier, "TLLI".

15. The wireless communication device (110) as claimed in claim 14, wherein the reduced ID is a subset of bits of the TLLI.

16. A radio network node (120) configured for managing contention resolution of uplink transmissions, the radio network node being configured for:
receiving (3020; 6020) an access request from a wireless communication device (110);
sending (3030; 6030) an access grant to the wireless communication device (110); and
receiving (3060-3120; 6060-6120), from the wireless communication device (110), at least two data blocks, **characterized in that** the at least two data blocks includes only one occurrence of a unique device identity "ID" and at least one occurrence of a reduced ID that is represented by fewer bits than the unique device ID and wherein the reduced ID is included within a Radio Link Control, "RLC", and/or Medium Access Control, "MAC", header of a data block..

17. The radio network node (120) as claimed in claim 16, wherein a first data block of said at least two data blocks includes said one occurrence of the unique device ID, wherein a second data block of said at least two data blocks includes said at least one occurrence of the reduced ID.

18. The radio network node (120) as claimed in any one of claims 16-17, wherein the wireless communication device (110) is configured to receive the unique device ID in a Radio Link Control, "RLC", data block and the unique device ID is a Temporary Logic Link Identifier, "TLLI".

## Patentansprüche

1. Verfahren, das von einer drahtlosen Kommunikationsvorrichtung (110) durchgeführt wird, zur Ermöglichung von Konfliktauflösung von Uplink-Übertragungen an einem Funknetzwerkknoten (120), wobei das Verfahren umfasst:
Senden (3010; 4010) einer Zugriffsanforderung an den Funknetzwerkknoten (120).
Empfangen (3040; 4040) einer Zugriffsbewilligung vom Funknetzwerkknoten (120); und
Senden (3050-3110; 4050-4110) mindestens zweier Datenblöcke an den Funknetzwerkknoten (120), **dadurch gekennzeichnet, dass** die mindestens zwei Datenblöcke nur eine Erscheinung einer eindeutigen Vorrichtungs-Identität, ID, und mindestens eine Erscheinung einer reduzierten ID umfassen, die durch weniger Bits als die eindeutige Vorrichtungs-ID dargestellt wird, und wobei die reduzierte ID innerhalb eines Funkübertragungssteuerungs, RLC,- und/oder Medienzugriffssteuerungs, MAC,-Headers eines Datenblocks enthalten ist.

2. Verfahren nach Anspruch 1, wobei ein erster Datenblock der mindestens zwei Datenblöcke die eine Erscheinung der eindeutigen Vorrichtungs-ID umfasst, wobei ein zweiter Datenblock der mindestens zwei Datenblöcke eine der mindestens einen Erscheinung der reduzierten ID umfasst.

3. Verfahren nach einem der Ansprüche 1 bis 2, wobei die eindeutige Vorrichtungs-ID in einem Funkübertragungssteuerungs, RLC,-Datenblock gesendet wird, und die eindeutige Vorrichtungs-ID eine temporäre Kennung einer logischen Verbindung, TLLI, ist.

4. Verfahren nach Anspruch 3, wobei die reduzierte ID ein Teilsatz von Bits der TLLI ist.

5. Verfahren, das von einem Funknetzwerkknoten (120) durchgeführt wird, zur Handhabung von Konfliktauflösung von Uplink-Übertragungen,
Empfangen (3020; 6020) einer Zugriffsanforderung von einer drahtlosen Kommunikationsvorrichtung (110);
Senden (3030; 6030) einer Zugriffsbewilligung an die drahtlose Kommunikationsvorrichtung (110); und
Empfangen (3060-3120; 6060-6120) mindestens zweier Datenblöcke von der drahtlosen Kommunikationsvorrichtung (110), **dadurch gekennzeichnet, dass** die mindestens zwei Datenblöcke nur eine Erscheinung einer eindeutigen Vorrichtungs-Identität, ID, und mindestens eine Erscheinung einer reduzierten ID umfassen, die durch weniger Bits als die eindeutige Vorrichtungs-ID dargestellt wird, und wobei die reduzierte ID innerhalb eines Funkübertragungssteuerungs, RLC,- und/oder Medienzugriffssteuerungs, MAC,-Headers eines Datenblocks enthalten ist.

6. Verfahren nach Anspruch 5, wobei ein erster Datenblock der mindestens zwei Datenblöcke die eine Erscheinung der eindeutigen Vorrichtungs-ID umfasst, wobei ein zweiter Datenblock der mindestens zwei Datenblöcke einer der mindestens einen Erscheinung der reduzierten ID umfasst.

7. Verfahren nach einem der Ansprüche 5 bis 6, wobei die eindeutige Vorrichtungs-ID in einem Funkübertragungssteuerungs, RLC,-Datenblock empfangen wird, und die eindeutige Vorrichtungs-ID eine temporäre Kennung einer logischen Verbindung, TLLI, ist.

8. Verfahren nach Anspruch 7, wobei die reduzierte ID ein Teilsatz von Bits der TLLI ist.

9. Drahtlose Kommunikationsvorrichtung (110), die zum Ermöglichen von Konfliktauflösung von Uplink-Übertragungen an einem Funknetzwerkknoten (120) konfiguriert ist, wobei die drahtlose Kommunikationsvorrichtung (110) konfiguriert ist zum:
Senden (3010; 4010) einer Zugriffsanforderung an den Funknetzwerkknoten (120).
Empfangen (3040; 4040) einer Zugriffsbewilligung vom Funknetzwerkknoten (120); und
Senden (3050-3110; 4050-4110) mindestens zweier Datenblöcke an den Funknetzwerkknoten (120), **dadurch gekennzeichnet, dass** die mindestens zwei Datenblöcke nur eine Erscheinung einer eindeutigen Vorrichtungs-Identität, ID, und mindestens eine Erscheinung einer reduzierten ID umfassen, die durch weniger Bits als die eindeutige Vorrichtungs-ID dargestellt wird, und wobei die reduzierte ID innerhalb eines Funkübertragungssteuerungs, RLC,- und/oder Medienzugriffssteuerungs, MAC,-Headers eines Datenblocks enthalten ist.

10. Drahtlose Kommunikationsvorrichtung (110) nach Anspruch 9, wobei die eine Erscheinung der eindeutigen Vorrichtungs-ID eine Erscheinung der mindestens einen Erscheinung der reduzierten ID umfasst.

11. Drahtlose Kommunikationsvorrichtung (110) nach Anspruch 9, wobei die mindestens eine Erscheinung der reduzierten ID von der einen Erscheinung der eindeutigen Vorrichtungs-ID ausgeschlossen ist.

12. Drahtlose Kommunikationsvorrichtung (110) nach einem der Ansprüche 10 bis 11, wobei ein erster Datenblock der mindestens zwei Datenblöcke die eine Erscheinung der eindeutigen Vorrichtungs-ID umfasst, wobei ein zweiter Datenblock der mindestens zwei Datenblöcke eine der mindestens einen Erscheinung der reduzierten ID umfasst.

13. Drahtlose Kommunikationsvorrichtung (110) nach Anspruch 12, wobei der erste Datenblock unter den mindestens zwei Datenblöcken an erster Stelle in der Reihenfolge ist, und wobei der zweite Datenblock unter den mindestens zwei Datenblöcke an zweiter Stelle in der Reihenfolge ist.

14. Drahtlose Kommunikationsvorrichtung (110) nach einem der Ansprüche 9 bis 13, wobei die drahtlose Kommunikationsvorrichtung (110) zum Senden der eindeutigen Vorrichtungs-ID in einem Funkübertragungssteuerungs, RLC,-Datenblock konfiguriert ist, und die eindeutige Vorrichtungs-ID eine temporäre Kennung einer logischen Verbindung, TLLI, ist.

15. Drahtlose Kommunikationsvorrichtung (110) nach Anspruch 14, wobei die reduzierte ID ein Teilsatz von Bits der TLLI ist.

16. Funknetzwerkknoten (120), der zum Handhaben von Konfliktauflösung von Uplink-Übertragungen konfiguriert ist, wobei der Funknetzwerkknoten konfiguriert ist zum:
Empfangen (3020; 6020) einer Zugriffsanforderung von einem drahtlosen Kommunikationsgerät (110);
Senden (3030; 6030) einer Zugriffsbewilligung an die drahtlose Kommunikationsvorrichtung (110); und
Empfangen (3060-3120; 6060-6120) mindestens zweier Datenblöcke von der drahtlosen Kommunikationsvorrichtung (110), **dadurch gekennzeichnet, dass** die mindestens zwei Datenblöcke nur eine Erscheinung einer eindeutigen Vorrichtungs-Identität, ID, und mindestens eine Erscheinung einer reduzierten ID umfassen, die durch weniger Bits als die eindeutige Vorrichtungs-ID dargestellt wird, und wobei die reduzierte ID innerhalb eines Funkübertragungssteuerungs, RLC,- und/oder Medienzugriffssteuerungs, MAC,-Headers eines Datenblocks enthalten ist.

17. Funknetzwerkknoten (120) nach Anspruch 16, wobei ein erster Datenblock der mindestens zwei Datenblöcke die eine Erscheinung der eindeutigen Vorrichtungs-ID umfasst, wobei ein zweiter Datenblock der mindestens zwei Datenblöcke die mindestens eine Erscheinung der reduzierten ID umfasst.

18. Funknetzwerkknoten (110) nach einem der Ansprüche 16 bis 17, wobei die drahtlose Kommunikationsvorrichtung (110) zum Empfangen der eindeutigen Vorrichtungs-ID in einem Funkübertragungssteuerungs, RLC,-Datenblock konfiguriert ist, und die eindeutige Vorrichtungs-ID eine temporäre Kennung einer logischen Verbindung, TLLI, ist.

## Revendications

1. Procédé, effectué par un dispositif de communication sans fil (110), pour permettre une résolution de concurrence de transmissions de liaison montante à un noeud de réseau radio (120), le procédé comprenant :
l'envoi (3010 ; 4010) d'une demande d'accès au noeud de réseau radio (120) ;
la réception (3040 ; 4040) d'un octroi d'accès en provenance du noeud de réseau radio (120) ; et
l'envoi (3050-3110 ; 4050-4110), au noeud de réseau radio (120), d'au moins deux blocs de données, **caractérisé en ce que** les au moins deux blocs de données incluent une seule survenance d'une identité, ID, de dispositif unique et au moins une survenance d'une ID réduite qui est représentée par moins de bits que l'ID de dispositif unique, et dans lequel l'ID réduite est incluse à l'intérieur d'un en-tête de commande de liaison radio, RLC, et/ou de commande d'accès au support, MAC, d'un bloc de données.

2. Procédé selon la revendication 1, dans lequel un premier bloc de données desdits au moins deux blocs de données inclut ladite survenance de l'ID de dispositif unique, dans lequel un deuxième bloc de données desdits au moins deux blocs de données inclut l'une de ladite au moins une survenance de l'ID réduite.

3. Procédé selon la revendication 1 à 2, dans lequel l'ID de dispositif unique est envoyée dans un bloc de données de commande de liaison radio, RLC, et l'ID de dispositif unique est un identifiant de liaison logique temporaire, TLLI.

4. Procédé selon la revendication 3, dans lequel l'ID réduite est un sous-ensemble de bits du TLLI.

5. Procédé, effectué par un noeud de réseau radio (120), pour gérer une résolution de concurrence de transmissions de liaison montante, le procédé comprenant :
la réception (3020 ; 6020) d'une demande d'accès en provenance d'un dispositif de communication sans fil (110) ;
l'envoi (3030 ; 6030) d'un octroi d'accès au dispositif de communication sans fil (110) ; et
la réception (3060-3120 ; 6060-6120), en provenance du dispositif de communication sans fil (110), d'au moins deux blocs de données, **caractérisé en ce que** les au moins deux blocs de données incluent une seule survenance d'une identité, ID, de dispositif unique et au moins une survenance d'une ID réduite qui est représentée par moins de bits que l'ID de dispositif unique, et dans lequel l'ID réduite est incluse à l'intérieur d'un en-tête de commande de liaison radio, RLC, et/ou de commande d'accès au support, MAC, d'un bloc de données.

6. Procédé selon la revendication 5, dans lequel un premier bloc de données desdits au moins deux blocs de données inclut ladite survenance de l'ID de dispositif unique, dans lequel un deuxième bloc de données desdits au moins deux blocs de données inclut l'une de ladite au moins une survenance de l'ID réduite.

7. Procédé selon la revendication 5 à 6, dans lequel l'ID de dispositif unique est envoyée dans un bloc de données de commande de liaison radio, RLC, et l'ID de dispositif unique est un identifiant de liaison logique temporaire, TLLI.

8. Procédé selon la revendication 7, dans lequel l'ID réduite est un sous-ensemble de bits du TLLI.

9. Dispositif de communication sans fil (110) configuré pour permettre une résolution de concurrence de transmissions de liaison montante à un noeud de réseau radio (120), dans lequel le dispositif de communication sans fil (110) est configuré pour :
l'envoi (3010 ; 4010) d'une demande d'accès au noeud de réseau radio (120) ;
la réception (3040 ; 4040) d'un octroi d'accès en provenance du noeud de réseau radio (120) ; et
l'envoi (3050-3110 ; 4050-4110), au noeud de réseau radio (120), d'au moins deux blocs de données, **caractérisé en ce que** les au moins deux blocs de données incluent une seule survenance d'une identité, ID, de dispositif unique et au moins une survenance d'une ID réduite qui est représentée par moins de bits que l'ID de dispositif unique, et dans lequel l'ID réduite est incluse à l'intérieur d'un en-tête de commande de liaison radio, RLC, et/ou de commande d'accès au support, MAC, d'un bloc de données.

10. Dispositif de communication sans fil (110) selon la revendication 9, dans lequel ladite survenance de l'ID de dispositif unique inclut une survenance de ladite au moins une survenance de l'ID réduite.

11. Dispositif de communication sans fil (110) selon la revendication 9, dans lequel ladite au moins une survenance de l'ID réduite est exclue de ladite survenance de l'ID de dispositif unique.

12. Dispositif de communication sans fil (110) selon la revendication 10 à 11, dans lequel un premier bloc de données desdits au moins deux blocs de données inclut ladite survenance de l'ID de dispositif unique, dans lequel un deuxième bloc de données desdits au moins deux blocs de données inclut l'une de ladite au moins une survenance de l'ID réduite.

13. Dispositif de communication sans fil (110) selon la revendication 12, dans lequel le premier bloc de données est le premier dans l'ordre parmi les au moins deux blocs de données, et dans lequel le deuxième bloc de données est le deuxième dans l'ordre parmi les au moins deux blocs de données.

14. Dispositif de communication sans fil (110) selon l'une quelconque des revendications 9 à 13, dans lequel le dispositif de communication sans fil (110) est configuré pour l'envoi de l'ID de dispositif unique dans un bloc de données de commande de liaison radio, RLC, et l'ID de dispositif unique est un identifiant de liaison logique temporaire, TLLI.

15. Dispositif de communication sans fil (110) selon la revendication 14, dans lequel l'ID réduite est un sous-ensemble de bits du TLLI.

16. Noeud de réseau radio (120) configuré pour gérer une résolution de concurrence de transmissions de liaison montante, le noeud de réseau radio étant configuré pour :
la réception (3020 ; 6020) d'une demande d'accès en provenance d'un dispositif de communication sans fil (110) ;
l'envoi (3030 ; 6030) d'un octroi d'accès au dispositif de communication sans fil (110) ; et
la réception (3060-3120 ; 6060-6120), en provenance du dispositif de communication sans fil (110), d'au moins deux blocs de données, **caractérisé en ce que** les au moins deux blocs de données incluent une seule survenance d'une identité, ID, de dispositif unique et au moins une survenance d'une ID réduite qui est représentée par moins de bits que l'ID de dispositif unique, et dans lequel l'ID réduite est incluse à l'intérieur d'un en-tête de commande de liaison radio, RLC, et/ou de commande d'accès au support, MAC, d'un bloc de données.

17. Noeud de réseau radio (120) selon la revendication 16, dans lequel un premier bloc de données desdits au moins deux blocs de données inclut ladite survenance de l'ID de dispositif unique, dans lequel un deuxième bloc de données desdits au moins deux blocs de données inclut ladite au moins une survenance de l'ID réduite.

18. Noeud de réseau radio (120) selon la revendication 16 à 17, dans lequel le dispositif de communication sans fil (110) est configuré pour la réception de l'ID de dispositif unique dans un bloc de données de commande de liaison radio, RLC, et l'ID de dispositif unique est un identifiant de liaison logique temporaire, TLLI.
